# EUROPEAN PATENT SPECIFICATION

(11) **EP 4 459 590 B1**
(45) Date of publication and mention of the grant of the patent: **11.02.2026**
(21) Application number: 22915826.6
(22) Date of filing: 20.12.2022
(51) Int. Cl.: G01R 31/389, G01R 31/392, H01M 10/44, H01M 10/48, H02J 13/00, H04L 9/40, H04Q 9/00, G08B 13/14, H01M 10/42

(54) **BATTERY-MONITORING SYSTEM**
BATTERIEÜBERWACHUNGSSYSTEM
SYSTÈME DE SURVEILLANCE DE BATTERIE

(30) Priority: 27.12.2021 JP 2021212555; 13.12.2022 JP 2022198705
(43) Date of publication of application: 06.11.2024
(73) Proprietor: DENSO CORPORATION, Kariya-city, Aichi 448-8661 (JP)
(72) Inventor: SHIMIZU Satoru, Kariya-city, Aichi 4488661 (JP); MAWATARI Kazuaki, Kariya-city, Aichi 4488661 (JP); ONO Kazuyuki, Kariya-city, Aichi 4488661 (JP); KAWABATA Kumiko, Kariya-city, Aichi 4488661 (JP); MATSUI Hiroshige, Kariya-city, Aichi 4488661 (JP); UCHIDA Keisuke, Kariya-city, Aichi 4488661 (JP); TAKADA Satoshi, Kariya-city, Aichi 4488661 (JP); TANAKA Ken, Kariya-city, Aichi 4488661 (JP)
(74) Representative: Kuhnen & Wacker Patent- und Rechtsanwaltsbüro PartG mbB
(86) International application number: PCT/JP2022/046896
(87) International publication number: WO 2023/127602

(56) References cited:
- WO-A1-2020/025943
- WO-A1-2021/145360
- JP-A- 2020 529 020
- JP-A- 2021 039 684
- JP-A- 2021 086 816

## Description

### CROSS-REFERENCE TO RELATED APPLICATIONS

The present application is based on Japanese Patent Application No. 2021-212555 filed on December 27, 2021 and Japanese Patent Application No. 2022-198705 filed on December 13, 2022.

### TECHNICAL FIELD

The present disclosure relates to a battery-monitoring system.

### BACKGROUND ART

In a battery-monitoring system, data obtained by a monitoring unit that is electrically connected to a battery and monitors the battery is transmitted to a higher device such as a battery control device or a battery charging device. There is a known technique in which raw data provided from a monitoring unit and processed data obtained by processing the raw data are encrypted by a higher device and managed by an autonomous distributed ledger (so-called blockchain) (see, for example, Patent Literature 1).

### PRIOR ART LITERATURE

### PATENT LITERATURE

Patent Literature 1: European Patent Application Publication No. 3570058 Patent Literature 2: WO2020/025943A1

### SUMMARY OF THE INVENTION

The technique disclosed in Patent Literature 1 described above is very useful in enhancing the reliability of a higher device, but the reliability of the data itself provided from the monitoring unit is not secured at all, and the technique lacks reliability in this respect.

The present invention is directed to subject-matter as disclosed by the appended claims. One object of the present disclosure is to provide a battery-monitoring system that can ensure reliability of data provided from a monitoring unit to a higher device. Another object of the present disclosure is to provide a battery-monitoring system that can return to a flow of battery circulation even in a case of being subjected to unauthorized access, or to provide a battery-monitoring system that can prevent theft of a battery.

According to an aspect of the present disclosure,
a battery-monitoring system includes:
a monitoring unit that monitors a battery that is chargeable/dischargeable; and
a higher device that is provided with monitoring data obtained by monitoring of the battery by the monitoring unit and saves, by using a blockchain, at least part of specific information included in the monitoring data, in which
the higher device includes
a block generation unit that generates a new block including a hash value based on at least part of the specific information and a last block linked at an end of the blockchain, and
an external communication device configured to save, in a distributed manner in a plurality of external devices, the new block generated by the block generation unit, and
at least one of the monitoring unit or the higher device is provided with a data protection unit configured to ensure reliability of the monitoring data.

According to this, since the reliability of the monitoring data is secured by the data protection unit provided in the at least one of the monitoring unit or the higher device, the reliability of the data provided from the monitoring unit to the higher device can be ensured.

According to another aspect of the present disclosure,
a battery-monitoring system includes:
a monitoring unit that monitors a battery that is chargeable/dischargeable; and
a higher device that is provided with monitoring data obtained by monitoring of the battery by the monitoring unit, in which
the monitoring unit is provided with a data protection unit configured to ensure reliability of the monitoring data, and
the data protection unit includes an access restriction unit that restricts external access to the monitoring data stored in a storage unit of the monitoring unit, and an access cancellation unit that cancels restriction of the access when a preset cancellation key is notified from the higher device in a state where the access is restricted.

Thus, when the access restriction unit is provided for the monitoring unit, reading and falsification of monitoring data by unauthorized access can be suppressed. In addition, since the access cancellation unit is provided for the monitoring unit, it is possible to return to the flow of battery circulation even in a case of being subjected to unauthorized access.

Furthermore, according to another aspect of the present disclosure,
a battery-monitoring system includes:
a monitoring unit that monitors a battery that is chargeable/dischargeable; and
a charger that controls charging of the battery, in which
each of the monitoring unit and the charger stores a unique **ID** assigned to the monitoring unit,
each of the monitoring unit and the charger includes a data authentication unit configured to perform mutual authentication of the unique ID, and
the charger prohibits charging of the battery in a case where an authentication result by the data authentication unit indicates a mismatch of the unique **ID** stored in each of the charger and the monitoring unit.

Thus, with a configuration that prohibits charging of the battery by the charger and loses the value of the battery in a case where unique IDs in the monitoring unit and the charger do not match, it is possible to demotivate a thief to steal the battery. This is very useful for preventing theft of the battery.

A parenthesized reference sign attached to each constituent element or the like indicates an example of a correspondence relationship between the constituent element or the like and a specific constituent element or the like described in embodiments described later.

### BRIEF DESCRIPTION OF DRAWINGS

FIG. 1 is a schematic diagram of a battery-monitoring system according to a first embodiment.
FIG. 2 is an explanatory diagram for explaining a lithium ion battery.
FIG. 3 is a schematic configuration diagram of a monitoring unit and a battery ECU of the battery-monitoring system.
FIG. 4 is an explanatory diagram for explaining a hash value of a new block.
FIG. 5 is an explanatory diagram for explaining a blockchain.
FIG. 6 is an explanatory diagram for explaining a countermeasure regarding impersonation by the monitoring unit.
FIG. 7 is an explanatory diagram for explaining a countermeasure regarding data counterfeit by signal interference.
FIG. 8 is an explanatory diagram for explaining a countermeasure regarding hijack of a higher device.
FIG. 9 is an explanatory diagram for explaining a countermeasure regarding battery theft.
FIG. 10 is a schematic diagram of a battery-monitoring system according to a second embodiment.
FIG. 11 is an explanatory diagram for explaining a first example of a countermeasure regarding unauthorized access.
FIG. 12 is a flowchart showing a flow of countermeasure processing of unauthorized access by the monitoring unit.
FIG. 13 is an explanatory diagram for explaining a second example of the countermeasure regarding unauthorized access.
FIG. 14 is a flowchart showing a flow of countermeasure processing of unauthorized access by the monitoring unit.
FIG. 15 is an explanatory diagram for explaining a third example of the countermeasure regarding unauthorized access.
FIG. 16 is a flowchart showing a flow of countermeasure processing of unauthorized access by the monitoring unit.
FIG. 17 is an explanatory diagram for explaining a fourth example of the countermeasure regarding unauthorized access.
FIG. 18 is a flowchart showing a flow of countermeasure processing of unauthorized access by the monitoring unit.

### DESCRIPTION OF EMBODIMENTS

Hereinafter, embodiments of the present disclosure will be described with reference to the drawings. In the following embodiments, identical or equivalent parts to those described in preceding embodiments are denoted by identical reference signs, and the description thereof may be omitted. When only some of the constituent elements are described in the embodiments, the other of the constituent elements can be applied with constituent elements described in preceding embodiments. In the following embodiments, the embodiments can be partially combined with one another even if not particularly specified as long as the combination is not particularly hindered.

### (First Embodiment)

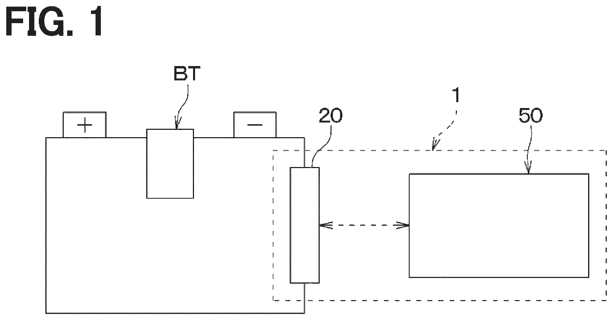

The first embodiment of the present disclosure will be described with reference to FIGS. 1 to 9. A battery-monitoring system 1 is a system that monitors a battery BT that is chargeable/dischargeable such as a high-voltage battery, a stationary battery, or a portable battery to be mounted on an automobile.

As illustrated in FIG. 1, the battery-monitoring system 1 includes a monitoring unit 20 that monitors the battery BT, and a battery ECU 50 provided with monitoring data obtained by monitoring of the battery BT by the monitoring unit 20. The battery ECU 50 is a higher device present above the monitoring unit 20. The battery-monitoring system 1 may include a charger CH that can control charging of the battery BT in place of the battery ECU 50. In this case, the charger CH corresponds to the higher device. Hereinafter, the battery ECU 50 and the charger CH may be called a higher device.

The battery BT that is a monitoring target is a secondary battery that is chargeable/dischargeable. The battery BT may be constituted by one battery cell, or may be constituted by an assembled battery in which a plurality of battery cells are connected in series. In the assembled battery, some battery cells may be connected in parallel.

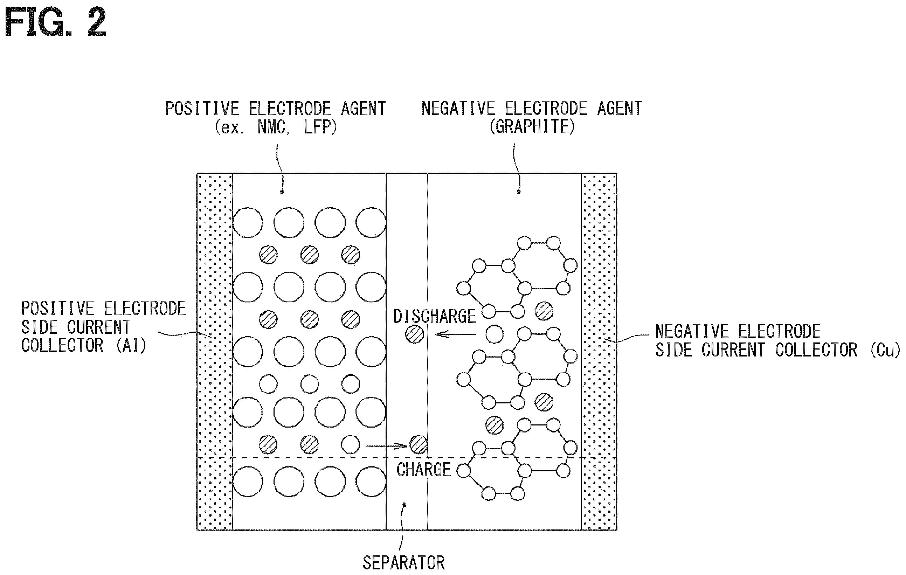

Specifically, the battery BT includes a lithium ion battery. For example, as illustrated in FIG. 2, the lithium ion battery is configured by employing lithium ferrophosphate LFP or nickel-manganese-cobalt NMC as a positive electrode agent, and employing graphite as a negative electrode agent. In the lithium ion battery, for example, a positive electrode side current collector includes aluminum, and a negative electrode side current collector includes copper. The lithium ion battery thus configured has excellent cycle characteristics of charge and discharge, but has a characteristic that the electrode potential is very close to the deposition potential of lithium, and lithium is likely to be deposited in a charged state.

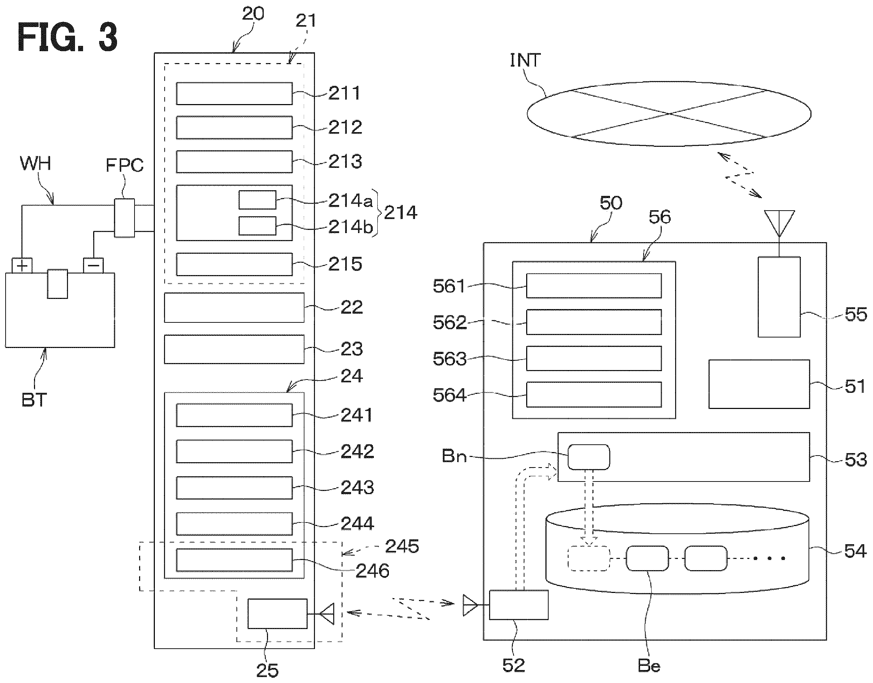

As illustrated in FIG. 3, the monitoring unit 20 is electrically connected to the battery BT via a connection member WH. The monitoring unit 20 may be integrally attached to the battery BT or may be detachably attached to the battery BT. The connection member WH includes a flexible printed circuit FPC on which a wiring pattern is printed.

The monitoring unit 20 includes a sensor unit 21, a storage unit 22, a first data protection unit 24, and a wireless communication device 25. In FIG. 3, each constituent element of the monitoring unit 20 is surrounded by a quadrilateral frame, but this is for collectively indicating each constituent element, and does not indicate that each constituent element is mounted on a single board.

The sensor unit 21 detects a state of the battery BT. The sensor unit 21 includes a temperature sensor 211, a current sensor 212, a voltage sensor 213, a deterioration detection unit 214, and an SOH estimation unit 215.

The temperature sensor 211 is a sensor that detects the battery temperature of the lithium ion battery. The temperature sensor 211 is mounted on the flexible printed circuit FPC, for example. The battery temperature may be estimated from a measurement result of internal impedance of the battery BT. In this case, the means for estimating the battery temperature functions as the temperature sensor 211.

The current sensor 212 is a sensor that detects an output current of the battery BT. The current sensor 212 may be mounted on the flexible printed circuit FPC, for example, or may be mounted on a board other than the flexible printed circuit FPC.

The voltage sensor 213 is a sensor that detects an output voltage of the battery BT. The voltage sensor 213 may be mounted on the flexible printed circuit FPC, for example, or may be mounted on a board other than the flexible printed circuit FPC.

The deterioration detection unit 214 detects a deterioration degree of the battery BT, which serves as an important index in setting a residual value of the battery BT. The deterioration detection unit 214 includes a deposition amount detection unit 214a and a coating detection unit 214b.

The deposition amount detection unit 214a is a device that detects lithium deposition in the lithium ion battery. Using a correlation between the lithium deposition amount in the lithium ion battery and behavior of the current and the voltage when both ends of the lithium ion battery are short-circuited, the deposition amount detection unit 214a estimates a lithium deposition amount from the behavior. Although not illustrated, the deposition amount detection unit 214a includes a short circuit that temporarily shortcircuits both ends of the lithium ion battery to discharge, and a calculator that estimates the lithium deposition amount based on the behavior of the current and the voltage when the lithium ion battery is short-circuited by the short circuit. The short circuit includes a short circuit switch, a coil, and a capacitor for short-circuiting both ends of the lithium ion battery. The internal resistance of the lithium ion battery and the coil and the capacitor of the short circuit constitute a self-resonant circuit. When both ends of the lithium ion battery are short-circuited, the calculator extracts a resistance change component having a correlation with the lithium deposition amount included in a signal waveform of at least one of the current or the voltage flowing through the short circuit, and calculates an estimation value of the lithium deposition amount from the extracted component.

Such an estimation method for the lithium deposition amount has a very simple configuration, and is a very useful method in that a specific battery deterioration mode can be detected by adjusting the discharge frequency from the lithium ion battery. The deposition amount detection unit 214a calculates, as the lithium deposition amount, a correction value in which the estimation value of the lithium deposition amount is corrected with at least one of the battery temperature detected by the temperature sensor 211 or a parasitic resistance value stored in advance in the storage unit 22 described later. The deposition amount detection unit 214a may estimate the lithium deposition amount by a method other than the above.

The coating detection unit 214b detects the thickness of a coating formed at an interface between a negative electrode and an electrolytic solution at the time of charging of the lithium ion battery. This coating is also called an SEI layer. SEI is an abbreviation for solid electrolyte interphase. The thickness of the SEI layer has a correlation with the behavior of the current and the voltage when both ends of the lithium ion battery are short-circuited by the above-described short circuit. The coating detection unit 214b estimates the thickness of the SEI layer from the behavior of the current and the voltage when both ends of the lithium ion battery are short-circuited by the short circuit. Specifically, when both ends of the battery BT are short-circuited by the short circuit, the coating detection unit 214b extracts a component having a correlation with the thickness of the SEI layer included in the signal waveform of at least one of the current or the voltage flowing through the short circuit, and estimates the thickness of the SEI layer from the extracted component. When the thickness of the SEI layer is detected, it is desirable to correct the thickness by the battery temperature or the like similarly to the detection of the lithium deposition amount. The coating detection unit 214b may estimate the thickness of the SEI layer by a method other than the above.

Here, the internal resistance of the battery BT and the cracking degree of a positive electrode active substance agent inside the battery BT are physical quantities that directly affect the deterioration of the battery BT. Therefore, the deterioration detection unit 214 may include a detection unit of the internal resistance of the battery BT and a detection unit of the cracking degree of the positive electrode active substance agent inside the battery BT.

The SOH estimation unit 215 estimates a volume ratio SOH of the battery BT based on a physical quantity having a high correlation with capacity deterioration of the battery BT. One factor of deterioration of the battery BT is an increase in the internal resistance of the battery BT. The internal resistance of the battery BT has a strong correlation with physical quantities such as the lithium deposition amount and the internal resistance of the battery BT. The internal resistance of the battery BT has temperature dependency, and affects the current and voltage of the battery BT. SOH is an abbreviation for state of health.

In consideration of these, the SOH estimation unit 215 of the present embodiment estimates the volume ratio SOH using an estimation model of the lithium deposition amount, the thickness of the SEI layer, the temperature, the current, and the voltage of the battery BT, and the volume ratio SOH. The estimation model of the volume ratio SOH is a control map or a function that defines, for example, the relationship among the volume ratio SOH, the lithium deposition amount, the thickness of the SEI layer, and the temperature, the current, and the voltage of the battery BT. The SOH estimation unit 215 may estimate the volume ratio SOH of the battery BT by a method other than the above. Although not illustrated, the monitoring unit 20 also includes an estimation unit that estimates a residual capacity SOC of the battery BT.

The storage unit 22 includes a readable and writable storage medium. The storage unit 22 stores a detection result of the state of the battery BT by the sensor unit 21, and the like. Specifically, the storage unit 22 stores a unique ID set for each monitoring unit 20 and a manufacturing history of the battery BT including an initial capacity of the battery BT and a repair history of the battery BT. The storage unit 22 stores, for example, the lithium deposition amount, the thickness of the SEI layer, the internal resistance of the battery BT, the volume ratio SOH, and the like as a use history of the battery BT. Hereinafter, the unique ID, the manufacturing history of the battery BT, and the use history of the battery BT are also collectively called "specific information". The storage unit 22 includes a non-transitory tangible storage medium.

A monitoring control unit 23 monitors the detection result of the state of the battery BT by the sensor unit 21, and determines the appropriateness of the state of the battery BT based on this monitoring result. When an abnormality of the battery BT is detected, the monitoring control unit 23 notifies the higher device such as the battery ECU 50 of the abnormality of the battery BT via the wireless communication device 25.

The first data protection unit 24 is for ensuring reliability of monitoring data provided from the monitoring unit 20 to the higher device such as the battery ECU 50 via the wireless communication device 25. The first data protection unit 24 will be described later.

The wireless communication device 25 is a device for enabling bidirectional communication with the higher device such as the battery ECU 50. The monitoring unit 20 receives various signals from the higher device such as the battery ECU 50 and transmits, to the higher device such as the battery ECU 50, monitoring data and the like obtained by monitoring of the battery BT by the monitoring unit 20. The monitoring data includes specific information such as the unique ID, the manufacturing history of the battery BT, the use history of the battery BT, and position information of the battery BT.

Next, the battery ECU 50 will be described. The battery ECU 50 is a higher device in the battery-monitoring system 1. The battery ECU 50 performs charging/discharging control of the battery BT and temperature adjustment control of the battery BT by a temperature control device based on monitoring data or the like provided from the monitoring unit 20. The battery ECU 50 includes a charging control function for controlling charging of the battery BT.

Specifically, the battery ECU 50 is configured to include a microcomputer including a processor, a memory 51, and an I/O and an internal communication device 52 configured to bidirectionally communicating with the monitoring unit 20. The memory 51 includes a non-transitory tangible storage medium.

It is expected that a large amount of used batteries BT will be generated in the near future due to rapid electrification of automobiles. Manufacturing the battery BT involves a large amount of CO2 emissions and use of rare metals. For this reason, through selection of reuse, rebuild, and recycle in accordance with the residual capacity SOC and the volume ratio SOH of the battery BT, construction of a battery ecosystem adapted to a circular society is expected for the used battery BT. In order to construct such a battery ecosystem, a traceability system that associates and manages values of the battery BT such as the residual capacity SOC and the volume ratio SOH and information such as the manufacturing history and the use history of the battery BT with the battery BT itself is important. It is assumed that a user who wants to use the battery BT accesses the traceability system, grasps necessary battery information, and uses the battery BT at an amount of money commensurate with the values of the battery BT. In such a traceability system, reliability of saved battery information is very important.

Under such a background, the battery-monitoring system 1 of the present disclosure improves the reliability of the traceability system by utilizing the blockchain technology in the traceability system. The blockchain technology is a type of database in which terminals on an information communication network are directly connected to one another, and a use history and the like of the battery 10 are processed and recorded in a distributed manner using an encryption technology.

The battery-monitoring system 1 of the present disclosure is configured to be able to provide, as reliable and updated data, a parameter representing a state of the battery BT used for a long period of time. That is, the battery-monitoring system 1 encrypts (i.e., hashes) monitoring data provided from the monitoring unit 20 and the parameter obtained by calculating the monitoring data using the higher device such as the battery ECU 50 and the charger CH. Then, the higher device manages the data in an autonomous distributed ledger (i.e., the blockchain), thereby improving the reliability of the battery-monitoring system 1.

Specifically, in the battery-monitoring system 1, the battery ECU 50 saves, using the blockchain, at least part of the specific information included in the monitoring data provided from the monitoring unit 20. The battery ECU 50 is configured to include a block generation unit 53, a storage 54, an external communication device 55, and a second data protection unit 56.

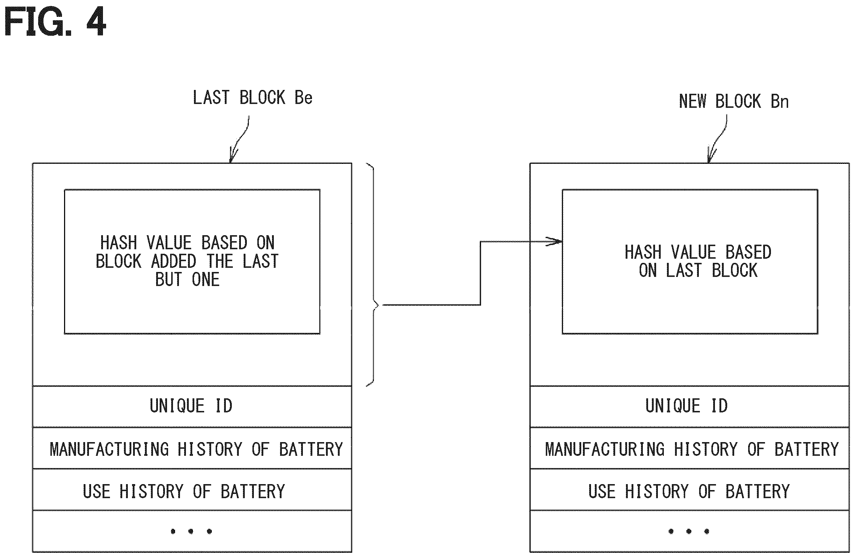

For example, as illustrated in FIG. 4, the block generation unit 53 generates a new block Bn including a hash value based on a last block Be linked at the end of the blockchain in addition to specific information including the unique ID, the manufacturing history of the battery BT, and the use history of the battery BT.

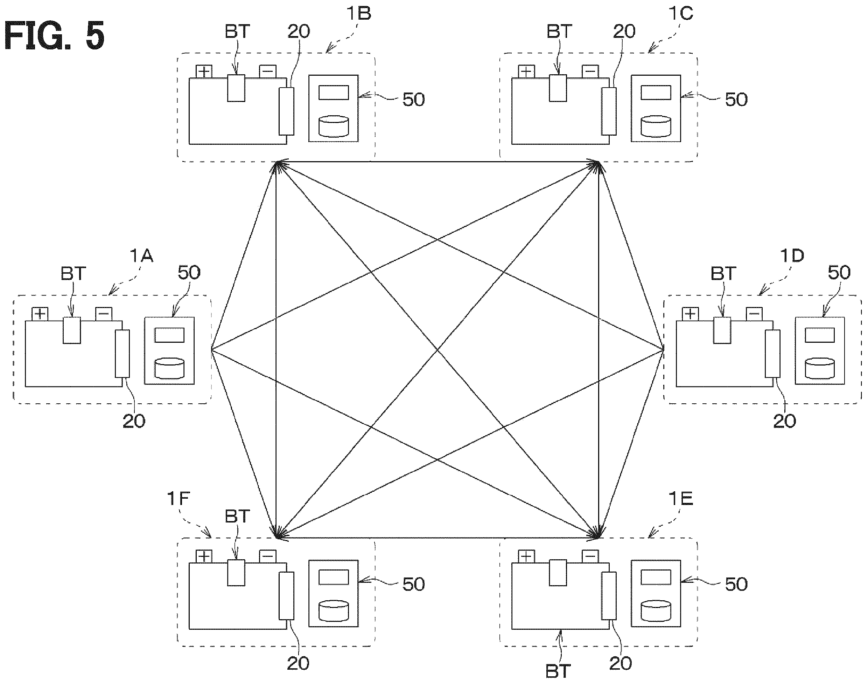

The battery ECU 50 saves the new block Bn generated by the block generation unit 53 into the storage 54 of its own, and, using the external communication device 55, saves, in a distributed manner, the new block Bn into a plurality of external devices connected via an Internet INT. For example, a battery-monitoring system 1A illustrated in FIG. 5 saves, in a distributed manner, the new block Bn into the storage 54 of each of battery-monitoring systems 1B, 1C, 1D, 1E, and 1F through mutual authentication with other battery-monitoring systems 1B, 1C, 1D, 1E, and 1F connected via the Internet INT.

In such a traceability system, the data saved in the storage 54 is protected from falsification by the blockchain technology, and therefore the reliability of the battery-monitoring system 1 is greatly improved.

However, the blockchain technology is a technology for protecting, from falsification, data saved in the storage 54, and the reliability of data itself provided from the monitoring unit 20 to the higher device is not secured at all. For this reason, there is a possibility that monitoring data different from actual one is accumulated in the storage 54 due to impersonation of the monitoring unit 20 by an imitation IM or data counterfeit by interference of a transmission signal of the monitoring unit 20 by an electromagnetic shield ES. This becomes a factor that damages the reliability of the traceability system.

When a higher device such as the battery ECU 50 is hijacked by hacking or the like, there is a possibility that various types of information are intentionally manipulated. Specifically, a case of interrupting communication from the monitoring unit 20, performing control so that the volume ratio SOH or the like of the battery BT is not updated, and determining that the battery BT is not deteriorated is assumed. Thus, even in a case where the higher device is hijacked, there is a problem that the reliability of data is impaired.

Furthermore, in the battery BT that is portable such as a replaceable battery, even if data is managed by the blockchain technology, if the data is stolen by a thief, the user loses the value of the battery BT, and a third party enjoys the value. Therefore, a countermeasure against theft becomes a problem.

In consideration of these, the battery-monitoring system 1 is provided with the data protection unit for ensuring the reliability of monitoring data. Specifically, in the battery-monitoring system 1, the monitoring unit 20 is provided with the first data protection unit 24, and the battery ECU 50 is provided with the second data protection unit 56.

More specifically, the monitoring unit 20 includes, as the first data protection unit 24, a first information authentication unit 241, a first data authentication unit 242, a diagnosis unit 243, a self-stopping unit 244, and an encrypted communication unit 245.

The first information authentication unit 241 is an authentication unit that performs mutual authentication on specific information provided from the monitoring unit 20 to the battery ECU 50 between the first information authentication unit 241 and the battery ECU 50. The first information authentication unit 241 determines whether the specific information included in the monitoring unit 20 matches the specific information included in the battery ECU 50.

The first data authentication unit 242 is an authentication unit that performs mutual authentication on a unique **ID** assigned to the monitoring unit 20 between the first data authentication unit 242 and the battery ECU 50. The first data authentication unit 242 determines whether the unique **ID** included in the monitoring unit 20 matches the unique **ID** included in the battery ECU 50.

The diagnosis unit 243 diagnoses appropriateness of a command signal transmitted from a higher device. The diagnosis unit 243 generates a learned model by learning the command signal from the higher device, and diagnoses appropriateness of the command signal by using the learned model. The diagnosis unit 243 generates the learned model by learning the tendency of the command signal from the higher device, for example.

The self-stopping unit 244 stops the function of the monitoring unit 20. The self-stopping unit 244 stops its own function, for example, when the diagnosis unit 243 diagnoses that the command signal from the higher device is inappropriate. The self-stopping unit 244 stops the function of the monitoring unit 20 by cutting off power supply to an IC constituting the monitoring unit 20, for example.

The encrypted communication unit 245 encrypts and transmits, to the higher device, the monitoring data. The encrypted communication unit 245 is configured to include an encryption processing unit 246 that encrypts the monitoring data and the wireless communication device 25.

On the other hand, the battery ECU 50 includes, as the second data protection unit 56, a second information authentication unit 561, a second data authentication unit 562, a decryption processing unit 563, and a charging restriction unit 564.

The second information authentication unit 561 is an authentication unit that performs mutual authentication on specific information provided from the monitoring unit 20 to the battery ECU 50 between the second information authentication unit 561 and the monitoring unit 20. The second information authentication unit 561 determines whether the information included in the monitoring unit 20 matches the information included in the battery ECU 50.

The second data authentication unit 562 is an authentication unit that performs mutual authentication on a unique ID assigned to the monitoring unit 20 between the second data authentication unit 562 and the monitoring unit 20. The second data authentication unit 562 determines whether the unique ID included in the monitoring unit 20 matches the unique ID included in the battery ECU 50.

The decryption processing unit 563 is provided corresponding to the encrypted communication unit 245 of the monitoring unit 20. The decryption processing unit 563 decrypts, by predetermined decryption processing, the monitoring data encrypted by the encryption processing unit 246.

The charging restriction unit 564 restricts charging of the battery BT. For example, in a case where authentication results of the first data authentication unit 242 and the second data authentication unit 562 indicate a mismatch of the unique ID stored in each of the higher device and the monitoring unit 20, the charging restriction unit 564 prohibits charging of the battery BT.

Here, the charger CH installed in a charging stand CS or the like is a higher device of the monitoring unit 20 of the battery BT together with the battery ECU 50. The charger CH controls charging of the battery BT. The charger CH is provided with a data authentication unit AS corresponding to the second data authentication unit 562 and a controller CR corresponding to the charging restriction unit 564.

In the battery-monitoring system 1 thus configured, since the data protection unit is provided in the monitoring unit 20 and the higher device, it is possible to take effective countermeasures against impersonation of the monitoring unit 20, data counterfeit by signal interference, hijack of the higher device, and battery theft. Hereinafter, countermeasures regarding impersonation of the monitoring unit 20, data counterfeit by signal interference, hijack of the higher device, and battery theft will be described.

### [Impersonation of Monitoring Unit 20]

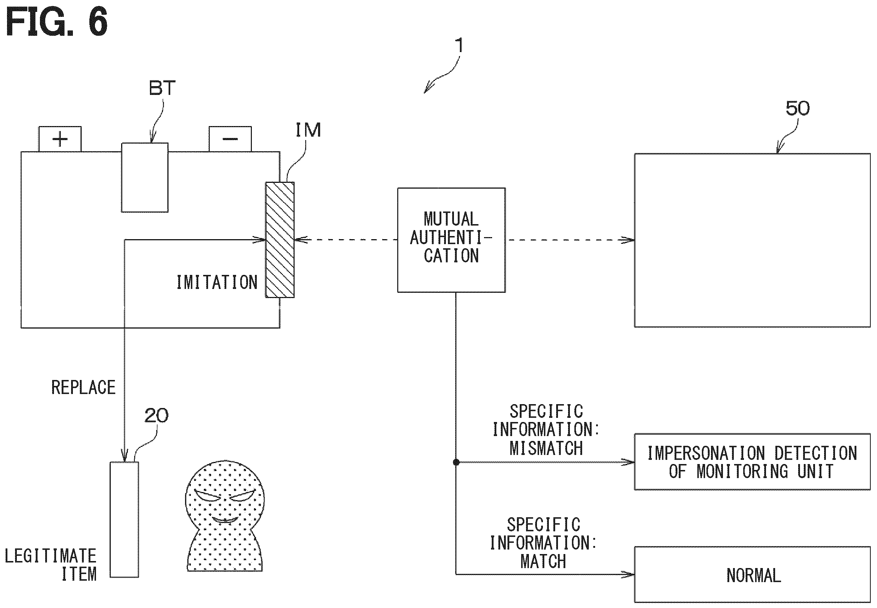

The countermeasure regarding impersonation of the monitoring unit 20 will be described with reference to FIG. 6. As the impersonation of the monitoring unit 20, for example, as illustrated in FIG. 6, a fraud in which monitoring data provided to a higher device is falsified by replacing the legitimate monitoring unit 20 with the imitation IM is conceivable.

On the other hand, the battery-monitoring system 1 causes both the monitoring unit 20 and the battery ECU 50 to hold at least part of specific information including the unique ID, the manufacturing history of the battery BT, and the use history of the battery BT, causes the information authentication units 241 and 561 to perform mutual authentication of them, and determines whether there is no contradiction. For example, it is determined to be normal when the specific information match in both of the information authentication units 241 and 561, and it is determined to be impersonation of the monitoring unit 20 when the specific information mismatches in one of the information authentication units 241 and 561.

### [Data Counterfeit by Signal Interference]

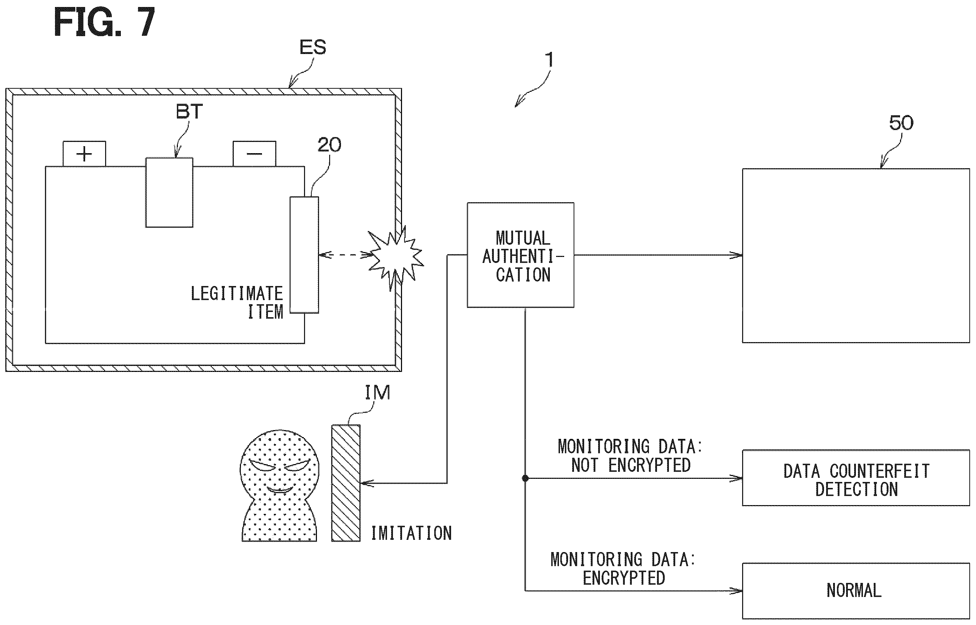

The countermeasure regarding data counterfeit by signal interference will be described with reference to FIG. 7. For example, as illustrated in FIG. 7, as data counterfeit by signal interference, a fraud in which a signal emitted from the legitimate monitoring unit 20 is interfered by the electromagnetic shield ES, and false monitoring data is provided from the imitation IM to the higher device is conceivable.

On the other hand, the battery-monitoring system 1 provides monitoring data encrypted by the monitoring unit 20 to the higher device. In the higher device, the second information authentication unit 561 determines whether the monitoring data provided from the monitoring unit 20 is encrypted. The second information authentication unit 561 determines to be is normal when the monitoring data is encrypted, and determines to be data counterfeit when the monitoring data is not encrypted.

### [Hijack of Higher Device]

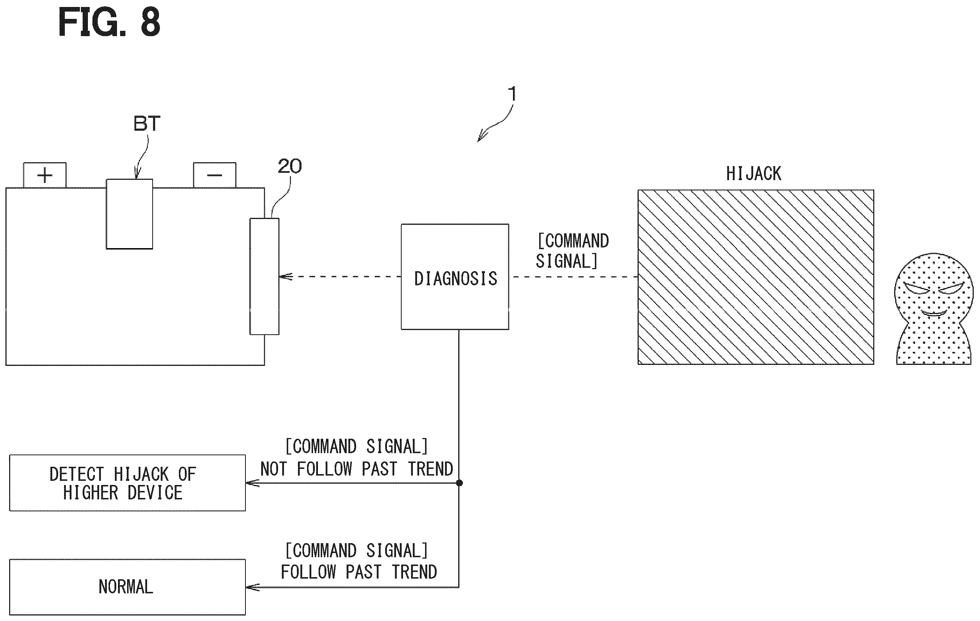

A countermeasure regarding hijack of the higher device will be described with reference to FIG. 8. As the hijack of the higher device, for example, as illustrated in FIG. 8, a fraud in which the higher device is hijacked by hacking or the like and only data advantageous for the hijacker is requested from the monitoring unit 20 is conceivable.

On the other hand, in the battery-monitoring system 1, the monitoring unit 20 includes the diagnosis unit 243 that diagnoses appropriateness of a command signal transmitted from the higher device. This diagnosis unit 243 generates a learned model by learning the command signal from the higher device, and diagnoses appropriateness of the command signal by using the learned model. The diagnosis unit 243 determines to be normal when the command signal follows the past tendency, and diagnoses that the higher device is hijacked when the command signal does not follow the past tendency.

### [Battery Theft]

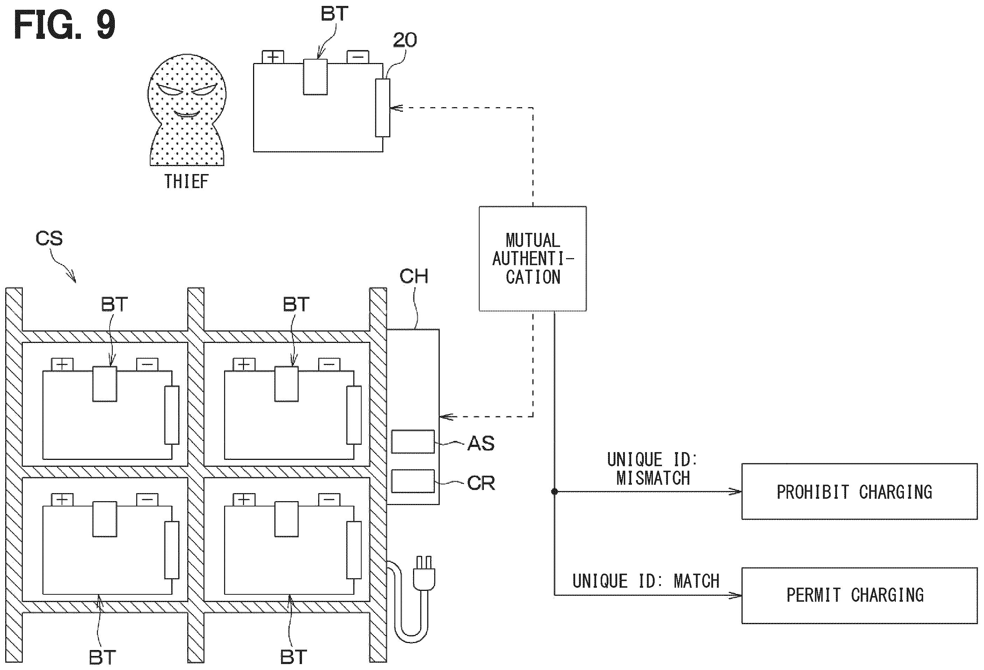

The countermeasure regarding battery theft will be described with reference to FIG. 9. If a replaceable battery is stolen, for example, as illustrated in FIG. 9, there is a possibility that charging of the battery BT is performed by the charger CH installed in the charging stand CS or the like.

On the other hand, the battery-monitoring system 1 causes both the monitoring unit 20 and the charger CH to hold the unique ID of the monitoring unit 20, causes the data authentication units 242 and AS to perform mutual authentication of them, and determines whether there is no contradiction. For example, when the unique IDs match in both the data authentication units 242 and AS, the monitoring unit 20 and the charger CH determine to be normal and permit charging. On the other hand, the monitoring unit 20 and the charger CH determine battery theft in a case where the unique IDs mismatch in one of the data authentication units 242 and AS. In this case, the charger CH prohibits charging of the battery BT. Alternatively, in a case where battery theft is judged, the monitoring unit 20, the battery ECU 50, and the like may prohibit discharging of the battery BT. The judgement of battery theft may be made by the user based on the position information of the battery BT, and charging or discharging may be prohibited by transferring that information to the monitoring unit 20, the battery ECU 50, or the charger CH.

The countermeasure regarding battery theft described above can be performed not only between the monitoring unit 20 and the charger CH but also between the monitoring unit 20 and the battery ECU 50. That is, the battery-monitoring system 1 may be configured to cause both the monitoring unit 20 and the battery ECU 50 to hold the unique ID of the monitoring unit 20, cause the data authentication units 242 and 562 to perform mutual authentication of them, and determine whether there is no contradiction.

In the battery-monitoring system 1 described above, the higher device is provided with monitoring data obtained by monitoring of the battery BT by the monitoring unit 20, and the higher device saves, by using a blockchain, at least part of specific information included in the monitoring data. According to this, the reliability of the battery-monitoring system 1 can be ensured.

Furthermore, at least one of the monitoring unit 20 or the higher device is provided with a data protection unit configured to ensure reliability of the monitoring data. According to this, since the reliability of the monitoring data is secured by the data protection unit provided in at least one of the monitoring unit 20 or the higher device, the reliability of the data provided from the monitoring unit 20 to the higher device can be ensured.

In addition, the higher device of the battery-monitoring system 1 prohibits charging of the battery BT in a case where an authentication result by the data authentication unit indicates a mismatch of the unique ID stored in each of the higher device and the monitoring unit 20. Thus, with a configuration that prohibits charging of the battery BT and loses the value of the battery BT in a case where the unique IDs in the monitoring unit 20 and the higher device do not match, it is possible to demotivate a thief to steal the battery BT. This is very useful for preventing theft of the battery BT.

The battery-monitoring system 1 can obtain the following effects.
(1) Each of the monitoring unit 20 and the higher device includes an information authentication unit configured to perform mutual authentication on the specific information as the data protection unit. According to this, it is possible to detect a fraud in which monitoring data provided to a higher device is falsified by replacing the legitimate monitoring unit 20 with the imitation IM, for example. As a result, it is possible to prevent falsification of monitoring data by impersonation of the monitoring unit 20.
(2) The monitoring unit 20 includes, as the data protection unit, the encrypted communication unit 245 that encrypts and transmits, to the higher device, the monitoring data. Thus, if the monitoring data provided from the monitoring unit 20 to the higher device is encrypted, it is possible for the higher device to detect a fraud in which a signal from the legitimate monitoring unit 20 is interfered and false monitoring data is provided to the higher device. As a result, it is possible to prevent counterfeit of monitoring data.
(3) The monitoring unit 20 includes the diagnosis unit 243 that diagnoses appropriateness of a command signal transmitted from the higher device as the data protection unit. According to this, for example, a fraud in which only data advantageous for the impersonator is requested from the monitoring unit 20 through impersonation of the higher device can be detected on the monitoring unit 20 side. As a result, it is possible to prevent falsification of monitoring data by impersonation of the higher device.
(4) The diagnosis unit 243 generates a learned model by learning the command signal from the higher device, and diagnoses appropriateness of the command signal by using the learned model. According to this, it is possible to reflect, in the learned model, the tendency of the command signal that requests only data advantageous for the hijacker is requested from the higher device, and improve accuracy of detecting hijack of the higher device.
(5) The monitoring unit 20 includes, as the data protection unit, the self-stopping unit 244 that stops its own function when the diagnosis unit 243 diagnoses that the command signal is inappropriate. According to this, it is possible to suppress spread of damage by a fraud in which only data advantageous for the impersonator is requested from the monitoring unit 20 through impersonation of the higher device.

### (Second Embodiment)

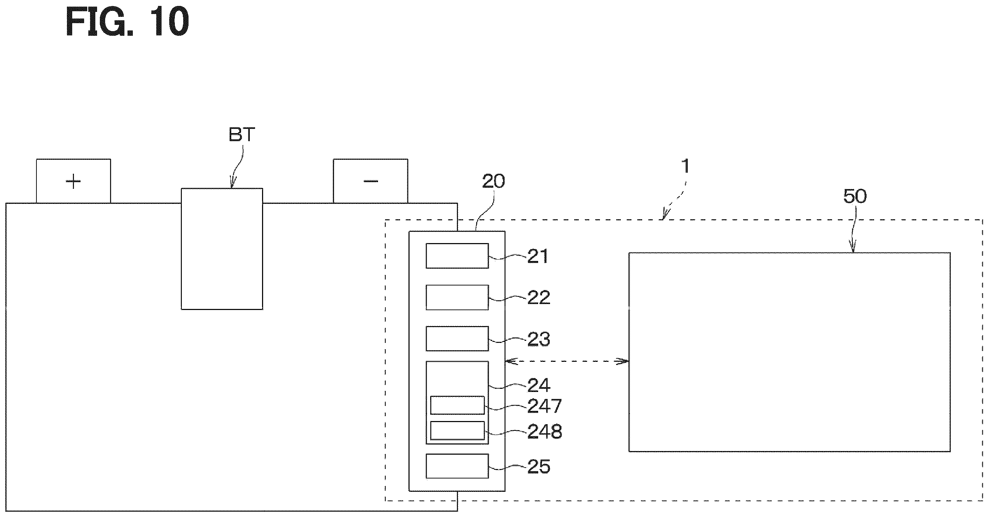

Next, the second embodiment will be described with reference to FIGS. 10 to 18. In the present embodiment, differences from the first embodiment will be mainly described.

In recent years, in order to realize circular economy, a trend of securely using up battery resources has been intensified, and it is predicted that a society that can appropriately control the cycle of "manufacturing of the battery BT" → "temporary use" → "secondary use" → "recycle" will come in the near future. The future battery circulation society is considered to require a system in which data of the number of held batteries and the health state in each process of battery use is grasped on a cloud, when and what kind of the battery BT to be supplied are predicted for each process, and a production plan can be optimized.

In order to realize such a circulation society, reliability of monitoring data including sensing information such as a health state of the battery BT is important, and a countermeasure against unauthorized access to a system including the battery BT is required. As an unauthorized access countermeasure, it is conceivable to delete monitoring data stored in the storage unit 22 of the monitoring unit 20 when unauthorized access occurs, for example. The unauthorized access is access by a person who does not have a valid access authority. For example, in a case of unauthorized access by hijack or the like of the higher device, there is a possibility of performing leakage of monitoring data and the like of the monitoring unit 20 and unauthorized use and falsification of the monitoring data.

However, in a case of deleting monitoring data stored in the storage unit 22 of the monitoring unit 20 as an unauthorized access countermeasure, the health state or the like of the battery BT becomes unknown. In this case, there is a problem of not being able to judge whether to be usable in "secondary use", and not being able to effectively use the battery BT in circulation of "temporary use" → "recycle".

In consideration of these, the present embodiment proposes the battery-monitoring system 1 that can return to the flow of battery circulation even in the case of being subjected to unauthorized access while taking countermeasures against reading and falsification of monitoring data by unauthorized access.

As illustrated in FIG. 10, in the battery-monitoring system 1 of the present embodiment, the first data protection unit 24 of the monitoring unit 20 is added with an access restriction unit 247 and an access cancellation unit 248. In FIG. 10, for convenience, illustration of the first information authentication unit 241, the first data authentication unit 242, the diagnosis unit 243, the self-stopping unit 244, and the encrypted communication unit 245 of the first data protection unit 24 is omitted.

The access restriction unit 247 restricts external access to the monitoring data stored in the storage unit 22 of the monitoring unit 20. The access restriction unit 247 restricts external access to the monitoring data when the unauthorized access is detected or predicted, for example.

The access cancellation unit 248 cancels restriction of access to the monitoring data in a state where access to the monitoring data stored in the storage unit 22 is restricted by the access restriction unit 247. For example, when the cancellation key is notified from the higher device having a valid access authority, the access cancellation unit 248 cancels restriction of access to the monitoring data.

The rest is the same as in the first embodiment. The battery-monitoring system 1 of the present embodiment can obtain, similarly to the first embodiment, effects achieved from a configuration common to or a configuration equivalent to that of the first embodiment.

Specific examples regarding unauthorized access countermeasures in the monitoring unit 20 will be described below. in the following first to fourth examples, the examples can be partially combined with one another even if not particularly specified as long as the combination is not particularly hindered.

### [First Example]

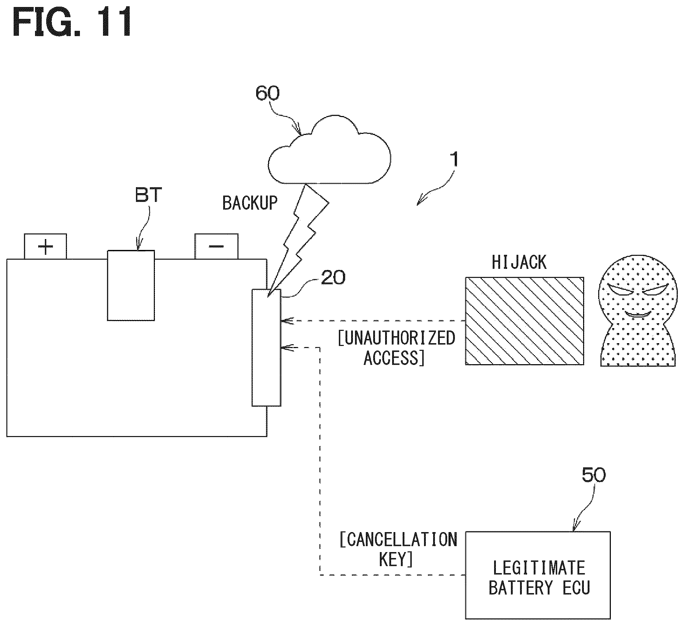

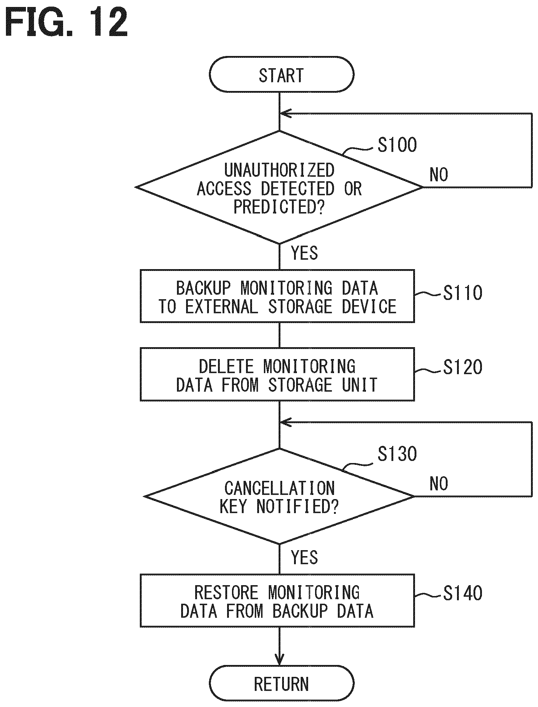

First, the first example will be described with reference to FIGS. 11 and 12. The monitoring unit 20 executes the processing shown in FIG. 12 as a countermeasure against unauthorized access by hijack of the higher device as illustrated in FIG. 11, for example. The processing shown in FIG. 12 is executed periodically or irregularly by the monitoring unit 20.

As shown in FIG. 12, in step S100, the monitoring unit 20 determines whether unauthorized access to the monitoring data stored in the storage unit 22 is detected or predicted.

The monitoring unit 20 detects unauthorized access based on a diagnosis result of a command signal by the diagnosis unit 243, for example. The monitoring unit 20 may judge the presence of unauthorized access not based on the diagnosis result of the diagnosis unit 243 but in a case where the authentication key at the time of accessing the monitoring unit 20 does not match or in a case where the password is continuously incorrect.

For example, even in a case of not being able to determine unauthorized access, the monitoring unit 20 predicts unauthorized access based on whether a similar action has been performed. The monitoring unit 20 judges that unauthorized access is predicted, for example, in a case where the order or the number of times of requesting various parameters representing the state of the battery BT is different from normal, in a case where the password is incorrect even once, or the like.

The monitoring unit 20 waits until unauthorized access is detected or predicted, and when unauthorized access is detected or predicted, the process proceeds to step S110. In step S110, the monitoring unit 20 stores, as backup data in an external storage device 60 such as a cloud server, the monitoring data stored in the storage unit 22. The backup data is desirably encrypted so as not to be discriminated from the outside.

The external storage device 60 is provided outside the monitoring unit 20. Data communication between the external storage device 60 and the monitoring unit 20 is performed by wireless communication by OTA or the like or wired communication by a communication cable or the like. OTA is an abbreviation of over the air.

Subsequently, in step S120, the monitoring unit 20 deletes the monitoring data stored in the storage unit 22. This restricts access to the monitoring data stored in the storage unit 22. The processing in steps S110 and S120 described above are implemented by the access restriction unit 247.

Subsequently, in step S130, the monitoring unit 20 determines whether a cancellation key for releasing restriction on access is notified from a higher device having a valid access authority such as the legitimate battery ECU 50.

The monitoring unit 20 waits until the cancellation key is notified, and when the cancellation key is notified from the higher device, the process proceeds to step S140. In step S140, the monitoring unit 20 acquires the backup data from the external storage device 60, and restores the monitoring data from the backup data to the storage unit 22. This cancels restriction of access to the monitoring data. The processing in step S140 described above is implemented by the access cancellation unit 248.

According to the unauthorized access countermeasure of the first example described above, it is possible to prevent reading and falsification of monitoring data by unauthorized access. In particular, in the present example, since the monitoring data is restored to the storage unit 22 from the backup data stored in the external storage device 60, it is possible to return to the flow of battery circulation even in a case of being subjected to unauthorized access.

### [Modification of First Example]

In the first example, access to the monitoring data is restricted in the case where unauthorized access to the monitoring data is detected or predicted, but the present disclosure is not limited to this. For example, the monitoring unit 20 may periodically restrict access to the monitoring data, or may restrict access to the monitoring data based on a command signal from the higher device. The same applies to the following examples.

Backup of the monitoring data to the external storage device 60 is not limited to a case where unauthorized access to the monitoring data is detected or predicted, and may be regularly performed, for example. In a case where backup of the monitoring data to the external storage device 60 is regularly performed, when unauthorized access to the monitoring data is detected or predicted, the monitoring data may be deleted from the storage unit 22 without performing backup of the monitoring data.

### [Second Example]

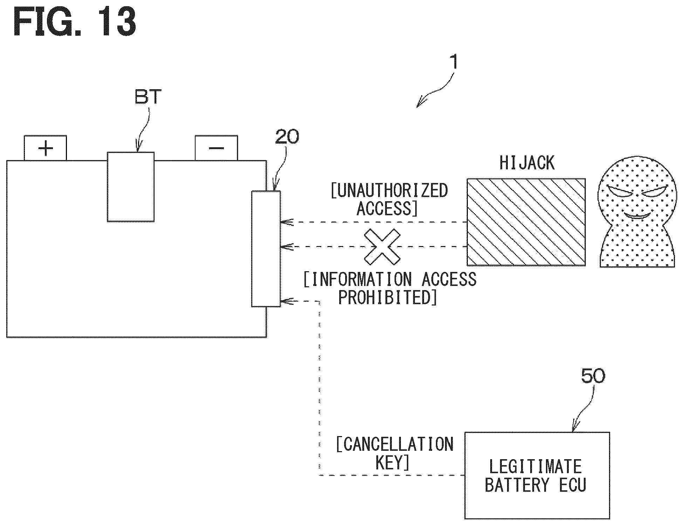

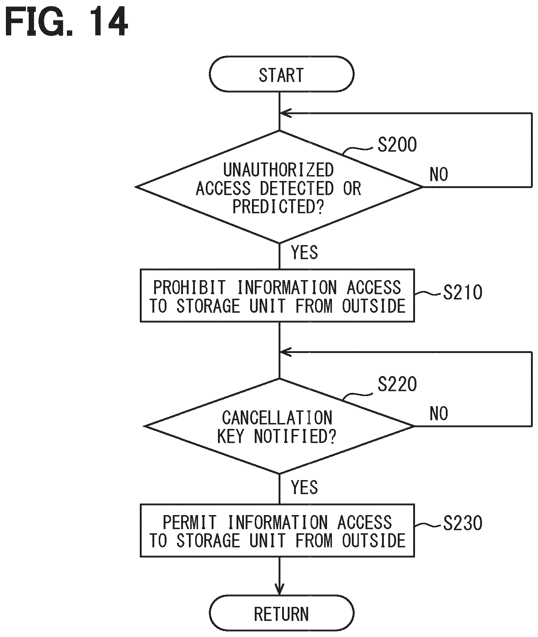

Next, the second example will be described with reference to FIGS. 13 and 14. The monitoring unit 20 executes the processing shown in FIG. 14 as a countermeasure against unauthorized access by hijack of the higher device as illustrated in FIG. 13, for example. The processing shown in FIG. 14 is executed periodically or irregularly by the monitoring unit 20.

As shown in FIG. 14, in step S200, the monitoring unit 20 determines whether unauthorized access to the monitoring data stored in the storage unit 22 is detected or predicted. Since this determination processing is similar to that of the first example, the description thereof will be omitted.

When unauthorized access is detected or predicted, the monitoring unit 20 prohibits information access to the storage unit 22 in step S210. The monitoring unit 20 prohibits information access to the storage unit 22 by, for example, interrupting communication between the outside and the storage unit 22 by stopping a function of the wireless communication device 25 or setting monitoring data unreadable. This restricts access to the monitoring data stored in the storage unit 22. The processing in step S210 described above is implemented by the access restriction unit 247.

Subsequently, in step S220, the monitoring unit 20 determines whether a cancellation key for releasing restriction on access is notified from a higher device having a valid access authority such as the legitimate battery ECU 50.

When the cancellation key is notified from the higher device, the monitoring unit 20 performs in step S230 processing of enabling information access to the storage unit 22 and permits information access to the storage unit 22. This cancels restriction of access to the monitoring data. The processing in step S230 described above is implemented by the access cancellation unit 248.

According to the unauthorized access countermeasure of the second example described above, it is possible to prevent reading and falsification of monitoring data by unauthorized access. In particular, the unauthorized access countermeasure of the present example has an advantage of being able to be implemented by simple processing of switching between prohibition and permission of information access to the storage unit 22.

### [Third Example]

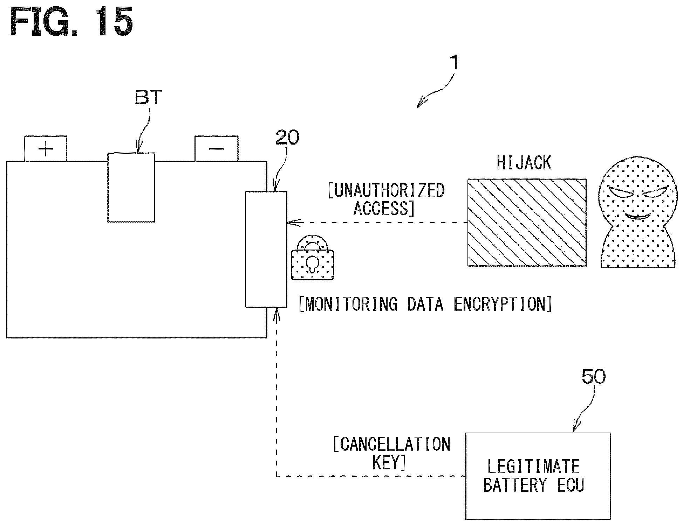

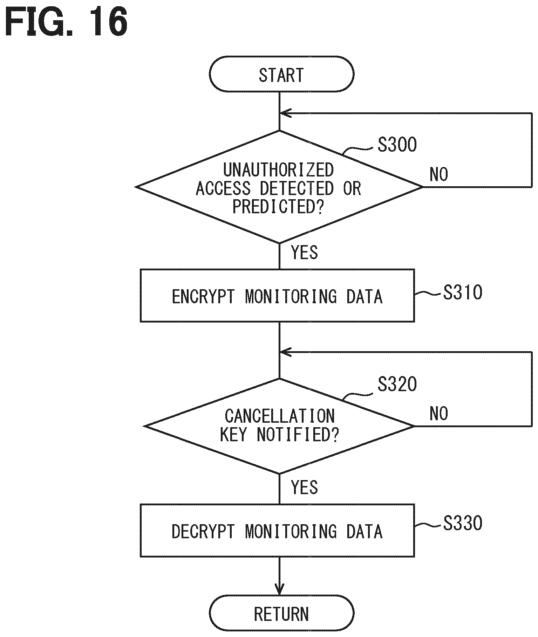

Next, the third example will be described with reference to FIGS. 15 and 16. The monitoring unit 20 executes the processing shown in FIG. 16 as a countermeasure against unauthorized access by hijack of the higher device as illustrated in FIG. 15, for example. The processing shown in FIG. 16 is executed periodically or irregularly by the monitoring unit 20.

As shown in FIG. 16, in step S300, the monitoring unit 20 determines whether unauthorized access to the monitoring data stored in the storage unit 22 is detected or predicted. Since this determination processing is similar to that of the first example, the description thereof will be omitted.

When unauthorized access is detected or predicted, the monitoring unit 20 encrypts the monitoring data stored in the storage unit 22 in step S310. Examples of the encryption method include a public-key cryptography. This restricts access to the monitoring data stored in the storage unit 22. The processing in step S310 described above is implemented by the access restriction unit 247.

Subsequently, in step S320, the monitoring unit 20 determines whether a cancellation key for releasing restriction on access is notified from a higher device having a valid access authority such as the legitimate battery ECU 50.

When the cancellation key is notified from the higher device, the monitoring unit 20 decrypts in step S330 the monitoring data to be encrypted. This cancels restriction of access to the monitoring data. The processing in step S330 described above is implemented by the access cancellation unit 248.

According to the unauthorized access countermeasure of the third example described above, it is possible to prevent reading and falsification of monitoring data by unauthorized access. In particular, the present example has an advantage of being able to implement a countermeasure against unauthorized access by simple processing of performing encryption and decryption of the monitoring data.

### [Fourth Example]

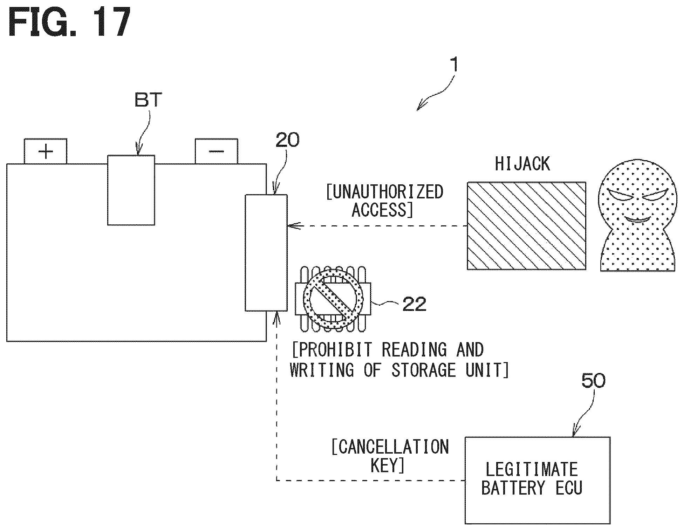

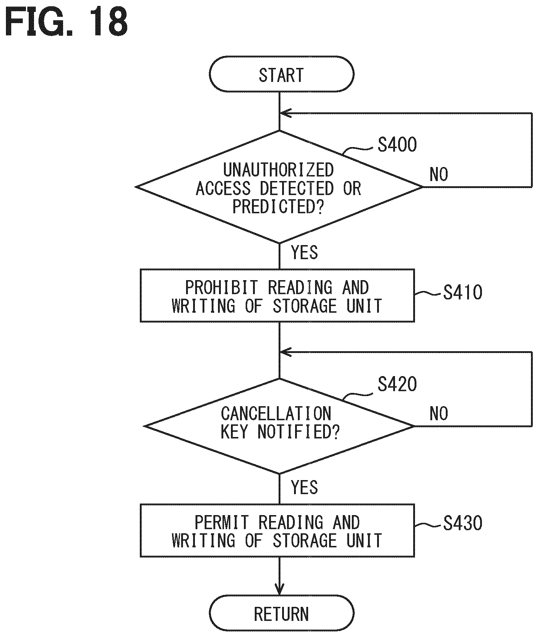

The fourth example will be described with reference to FIGS. 17 and 18. The monitoring unit 20 executes the processing shown in FIG. 18 as a countermeasure against unauthorized access by hijack of the higher device as illustrated in FIG. 17, for example. The processing shown in FIG. 18 is executed periodically or irregularly by the monitoring unit 20.

As shown in FIG. 18, in step S400, the monitoring unit 20 determines whether unauthorized access to the monitoring data stored in the storage unit 22 is detected or predicted. Since this determination processing is similar to that of the first example, the description thereof will be omitted.

When unauthorized access is detected or predicted, the monitoring unit 20 prohibits at least one of reading or rewriting of the monitoring data in step S410. For example, the monitoring unit 20 prohibits at least one of reading or rewriting of the monitoring data by setting the access right of the folder storing the monitoring data to be unreadable or unrewritable. This restricts access to the monitoring data stored in the storage unit 22. The processing in step S410 described above is implemented by the access restriction unit 247.

Subsequently, in step S420, the monitoring unit 20 determines whether a cancellation key for releasing restriction on access is notified from a higher device having a valid access authority such as the legitimate battery ECU 50.

When the cancellation key is notified from the higher device, the monitoring unit 20 permits reading and rewriting of the monitoring data in the storage unit 22 in step S430. This cancels restriction of access to the monitoring data. The processing in step S430 described above is implemented by the access cancellation unit 248.

According to the unauthorized access countermeasure of the fourth example described above, it is possible to prevent reading or falsification of monitoring data by unauthorized access. In particular, the present example has an advantage of being able to implement a countermeasure against unauthorized access by simple processing of performing setting change of the access right of the folder storing the monitoring data.

### (Other Embodiments)

Although the representative embodiments of the present disclosure have been described above, the present disclosure is not limited to the above-described embodiments, and can be variously modified as follows, for example.

As in the above-described embodiments, the battery-monitoring system 1 is desirably configured to be able to cope with each of "impersonation of the monitoring unit 20", "data counterfeit by signal interference", "hijack of a higher device", "battery theft", and "unauthorized access", but the present disclosure is not limited to this. The battery-monitoring system 1 may be configured to be able to cope with a part of the fraud, or may be configured to be able to cope with another fraud other than the fraud described above.

As in the above-described embodiments, the higher device desirably saves, by using the blockchain, at least part of the specific information included in the monitoring data, but the present disclosure needs not be so.

As in the above-described embodiments, the sensor unit 21 of the monitoring unit 20 desirably includes the temperature sensor 211, the current sensor 212, the voltage sensor 213, the deterioration detection unit 214, and the SOH estimation unit 215, but the present disclosure is not limited to this. The sensor unit 21 of the monitoring unit 20 needs not be provided with, for example, the deterioration detection unit 214 and the SOH estimation unit 215.

As in the above-described embodiments, the first data protection unit 24 desirably includes the first information authentication unit 241, the first data authentication unit 242, the diagnosis unit 243, the self-stopping unit 244, the encrypted communication unit 245, the access restriction unit 247, and the access cancellation unit 248, but the present disclosure is not limited to this. The first data protection unit 24 needs not be provided with, for example, some of the first information authentication unit 241, the first data authentication unit 242, the diagnosis unit 243, the self-stopping unit 244, the encrypted communication unit 245, the access restriction unit 247, and the access cancellation unit 248.

As in the above-described embodiments, the second data protection unit 56 of the battery ECU 50 desirably includes the second information authentication unit 561, the second data authentication unit 562, the decryption processing unit 563, and the charging restriction unit 564, but the present disclosure is not limited to this. The second data authentication unit 562 needs not to be provided with, for example, some of the second information authentication unit 561, the second data authentication unit 562, the decryption processing unit 563, and the charging restriction unit 564.

In the above-described embodiments, the exemplary connection member WH includes the flexible printed circuit FPC, but the present disclosure is not limited to this, and the connection member WH needs not include the flexible printed circuit FPC.

In the above-described embodiments, the battery ECU 50 and the charger CH are exemplified as the higher device of the monitoring unit 20, but the higher device may be configured by a device different from the battery ECU 50 and the charger CH.

The battery-monitoring system 1 assumes the lithium ion battery as a monitoring target, but the present disclosure is not limited to this. The monitoring target of the battery-monitoring system 1 may be a battery other than the lithium ion battery. The battery-monitoring system 1 may have a configuration in which the monitoring unit 20 is connected to the higher device not wirelessly but by wire. The battery-monitoring system 1 is not limited to one that completely matches the one described above, and may be partially different from the one described above.

In the above-described embodiments, it is needless to say that the elements constituting the embodiments are not necessarily essential unless otherwise specified as being essential in particular or and obviously essential in principle.

In the above-described embodiments, when a numerical value such as the number, a numerical value, an amount, or a range of the constituent elements of the embodiments is mentioned, the numerical value is not limited to the specific number unless otherwise specified as being essential in particular and obviously limited to the specific number in principle.

In the above-described embodiments, when the shapes, positional relationships, and the like of the constituent elements and the like are mentioned, the shapes, positional relationships, and the like are not limited to those mentioned unless otherwise specified and limited to specific shapes, positional relationships, and the like in principle.

The control unit and the method thereof of the present disclosure may be implemented by a dedicated computer provided by configuring a memory and a processor programmed to execute one or a plurality of functions embodied by a computer program. The control unit and the method thereof of the present disclosure may be implemented by a dedicated computer provided by configuring a processor by one or more dedicated hardware logic circuits. The control unit and the method thereof of the present disclosure may be implemented by one or more dedicated computers configured by a combination of a processor programmed to execute one or a plurality of functions and a memory and a processor configured by one or more hardware logic circuits. The computer program may be stored in a computer-readable non-transitory tangible recording medium as an instruction executed by the computer.

## Claims

1. A battery-monitoring system comprising:
a monitoring unit (20) that monitors a battery that is chargeable/dischargeable; and
a higher device (50) that is provided with monitoring data obtained by monitoring of the battery by the monitoring unit and saves, by using a blockchain, at least part of specific information included in the monitoring data, wherein
the higher device includes
a block generation unit (53) that generates a new block including a hash value based on the at least part of the specific information and a last block linked at an end of the blockchain, and
an external communication device (55) configured to save, in a distributed manner in a plurality of external devices, the new block generated by the block generation unit,
at least one of the monitoring unit or the higher device is provided with a data protection unit (24, 56) configured to ensure reliability of the monitoring data,
**characterized in that**
the data protection unit provided in the monitoring unit includes a diagnosis unit (243) that generates a learned model by learning a tendency of a command signal transmitted from the higher device and diagnoses appropriateness of a command signal by using the learned model, and
the diagnosis unit determines the command signal as appropriate when the command signal follows a past tendency.

2. The battery-monitoring system according to claim 1, wherein each of the monitoring unit and the higher device includes an information authentication unit (241, 561) configured to perform mutual authentication on the specific information as the data protection unit.

3. The battery-monitoring system according to claim 1 or 2, wherein the monitoring unit includes, as the data protection unit, an encrypted communication unit (245) that encrypts and transmits, to the higher device, the monitoring data.

4. The battery-monitoring system according to any one of claims 1 to 3, wherein the monitoring unit includes, as the data protection unit, a self-stopping unit (244) that stops its own function when the diagnosis unit diagnoses that the command signal is inappropriate.

5. The battery-monitoring system according to any one of claims 1 to 4, wherein
the higher device includes a charging control function for controlling charging of the battery,
each of the monitoring unit and the higher device stores a unique **ID** assigned to the monitoring unit,
each of the monitoring unit and the higher device includes a data authentication unit (242, 562) configured to perform mutual authentication on the unique ID, and
the higher device prohibits charging of the battery in a case where an authentication result by the data authentication unit indicates a mismatch of the unique **ID** stored in each of the higher device and the monitoring unit.

6. The battery-monitoring system according to any one of claims 1 to 5, wherein the monitoring unit includes, as the data protection unit, an access restriction unit (247) that restricts external access to the monitoring data stored in a storage unit (22) of the monitoring unit, and an access cancellation unit (248) that cancels restriction of the access when a preset cancellation key is notified from the higher device in a state where the access is restricted.

7. The battery-monitoring system according to claim 6, wherein
the access restriction unit restricts the access by causing an external storage device (60) outside the monitoring unit to store the monitoring data as backup data and then deleting the monitoring data from the storage unit, and
when the cancellation key is notified, the access cancellation unit cancels restriction of the access by restoring the monitoring data to the storage unit by using the backup data stored in the external storage device.

8. The battery-monitoring system according to claim 6 or 7, wherein
the access restriction unit restricts the access by prohibiting information access to the storage unit, and
when the cancellation key is notified, the access cancellation unit cancels restriction of the access by permitting the information access.

9. The battery-monitoring system according to claim 6 or 7, wherein
the access restriction unit restricts the access by encrypting the monitoring data in the storage unit, and
when the cancellation key is notified, the access cancellation unit cancels restriction of the access by decrypting the encrypted monitoring data.

10. The battery-monitoring system according to claim 6 or 7, wherein
the access restriction unit restricts the access by prohibiting at least one of reading or rewriting of the monitoring data in the storage unit, and
when the cancellation key is notified, the access cancellation unit cancels restriction of the access by permitting the reading and the rewriting of the monitoring data in the storage unit.

## Patentansprüche

1. Batterieüberwachungssystem, umfassend:
eine Überwachungseinheit (20), die eine aufladbare/entladbare Batterie überwacht; und
eine übergeordnete Vorrichtung (50), die mit Überwachungsdaten versorgt wird, die durch die Überwachung der Batterie durch die Überwachungseinheit gewonnen werden, und die unter Verwendung einer Blockchain mindestens einen Teil der in den Überwachungsdaten enthaltenen spezifischen Informationen speichert, wobei
die übergeordnete Vorrichtung umfasst
eine Blockerzeugungseinheit (53), die einen neuen Block erzeugt, der einen Hashwert auf der Grundlage des mindestens einen Teils der spezifischen Informationen und einen letzten Block enthält, der an ein Ende der Blockkette angehängt ist, und
eine externe Kommunikationseinrichtung (55), die so konfiguriert ist, dass sie den von der Blockerzeugungseinheit erzeugten neuen Block verteilt in einer Vielzahl von externen Geräten speichert,
mindestens eine der Überwachungseinheit oder der übergeordneten Vorrichtung mit einer Datenschutzvorrichtung (24, 56) versehen ist, die so konfiguriert ist, dass sie die Zuverlässigkeit der Überwachungsdaten sicherstellt, **dadurch gekennzeichnet, dass**
die in der Überwachungseinheit vorgesehene Datenschutzvorrichtung eine Diagnoseeinheit (243) umfasst, die ein gelerntes Modell durch Lernen einer Tendenz eines von der übergeordneten Vorrichtung übertragenen Befehlssignals erzeugt und die Angemessenheit eines Befehlssignals unter Verwendung des gelernten Modells diagnostiziert, und
die Diagnoseeinheit das Befehlssignal als angemessen bestimmt, wenn das Befehlssignal einer vergangenen Tendenz folgt.

2. Batterieüberwachungssystem nach Anspruch 1, wobei sowohl die Überwachungseinheit als auch die übergeordnete Vorrichtung eine Informationsauthentifizierungseinheit (241, 561) umfassen, die so konfiguriert ist, dass sie als Datenschutzvorrichtung eine gegenseitige Authentifizierung der spezifischen Informationen durchführt.

3. Batterieüberwachungssystem nach Anspruch 1 oder 2, wobei die Überwachungs seinheit als Datenschutz-Einheit eine verschlüsselte Kommunikationseinheit (245) umfasst, die die Überwachungsdaten verschlüsselt und an das übergeordnete Gerät überträgt.

4. Batterieüberwachungssystem gemäß einem der Ansprüche 1 bis 3, wobei die Überwachungseinheit als Datenschutzeinheit eine Selbstabschalteinheit (244) umfasst, die ihre eigene Funktion stoppt, wenn die Diagnoseeinheit diagnostiziert, dass das Befehlssignal unangemessen ist.

5. Batterieüberwachungssystem nach einem der Ansprüche 1 bis 4, wobei
das übergeordnete Gerät eine Ladesteuerungsfunktion zum Steuern des Ladens der Batterie umfasst,
die Überwachungseinheit und die übergeordnete Vorrichtung jeweils eine der Überwachungseinheit zugewiesene eindeutige **ID** speichern,
die Überwachungseinheit und die übergeordnete Vorrichtung jeweils eine Datenauthentifizierungseinheit (242, 562) umfassen, die so konfiguriert ist, dass sie eine gegenseitige Authentifizierung anhand der eindeutigen **ID** durchführt, und
die übergeordnete Vorrichtung das Laden der Batterie in einem Fall verhindert, in dem ein Authentifizierungsergebnis durch die Datenauthentifizierungseinheit eine Nichtübereinstimmung der in der übergeordneten Vorrichtung und der Überwachungseinheit gespeicherten eindeutigen **ID** anzeigt.

6. Batterieüberwachungssystem nach einem der Ansprüche 1 bis 5, wobei die Überwachungseinheit als Datenschutzvorrichtung eine Zugriffsbeschränkungsvorrichtung (247) umfasst, die den externen Zugriff auf die in einer Speichereinheit (22) der Überwachungseinheit gespeicherten Überwachungsdaten einschränkt, und eine Zugriffsaufhebungseinheit (248) umfasst, die die Einschränkung des Zugriffs aufhebt, wenn ein voreingestellter Aufhebungsschlüssel von dem übergeordneten Gerät in einem Zustand, in dem der Zugriff eingeschränkt ist, gemeldet wird.

7. Batterieüberwachungssystem nach Anspruch 6, wobei
die Zugriffsbeschränkungseinheit den Zugriff dadurch beschränkt, dass sie ein externes Speichergerät (60) außerhalb der Überwachungseinheit veranlasst, die Überwachungsdaten als Sicherungsdaten zu speichern, und dann die Überwachungsdaten aus der Speichereinheit löscht, und
wenn der Aufhebungsschlüssel gemeldet wird, die Zugriffsaufhebungseinheit die Zugriffsbeschränkung aufhebt, indem sie die Überwachungsdaten unter Verwendung der in dem externen Speichergerät gespeicherten Sicherungsdaten in der Speichereinheit wiederherstellt.

8. Batterieüberwachungssystem nach Anspruch 6 oder 7, wobei
die Zugriffsbeschränkungseinheit den Zugriff einschränkt, indem sie den Informationszugriff auf die Speichereinheit untersagt, und
wenn der Löschschlüssel gemeldet wird, die Zugriffslösch-Einheit die Zugriffsbeschränkung aufhebt, indem sie den Informationszugriff zulässt.

9. Batterieüberwachungssystem nach Anspruch 6 oder 7, wobei
die Zugriffsbeschränkungseinheit den Zugriff durch Verschlüsseln der Überwachungsdaten in der Speichereinheit beschränkt, und
wenn der Löschschlüssel gemeldet wird, die Zugriffslöschungseinheit die Zugriffsbeschränkung aufhebt, indem sie die verschlüsselten Überwachungsdaten entschlüsselt.

10. Batterieüberwachungssystem nach Anspruch 6 oder 7, wobei
die Zugriffsbeschränkungseinheit den Zugriff durch Verbieten mindestens eines der Vorgänge Lesen oder Überschreiben der Überwachungsdaten in der Speichereinheit beschränkt, und
wenn der Löschschlüssel gemeldet wird, die Zugriffslösch-Einheit die Zugriffsbeschränkung aufhebt, indem sie das Lesen und Überschreiben der Überwachungsdaten in der Speichereinheit zulässt.

## Revendications

1. Un système de surveillance de batterie comprenant :
une unité de surveillance (20) qui surveille une batterie rechargeable/déchargeable ; et
un dispositif supérieur (50) qui reçoit les données de surveillance obtenues par la surveillance de la batterie par l'unité de surveillance et enregistre, à l'aide d'une chaîne de blocs, au moins une partie des informations spécifiques contenues dans les données de surveillance, dans lequel
le dispositif supérieur comprend
une unité de génération de blocs (53) qui génère un nouveau bloc comprenant une valeur de hachage basée sur au moins une partie des informations spécifiques et un dernier bloc lié à une extrémité de la chaîne de blocs, et
un dispositif de communication externe (55) configuré pour enregistrer, de manière distribuée dans une pluralité de dispositifs externes, le nouveau bloc généré par l'unité de génération de blocs,
au moins l'un parmi l'unité de surveillance et le dispositif supérieur est muni d'une unité de protection des données (24, 56) configurée pour garantir la fiabilité des données de surveillance, **caractérisé en ce que**
l'unité de protection des données prévue dans l'unité de surveillance comprend une unité de diagnostic (243) qui génère un modèle appris en apprenant une tendance d'un signal de commande transmis depuis le dispositif supérieur et diagnostique la pertinence d'un signal de commande en utilisant le modèle appris, et
l'unité de diagnostic détermine que le signal de commande est pertinent lorsque le signal de commande suit une tendance passée.

2. Le système de surveillance de batterie selon la revendication 1, dans lequel l'unité de surveillance et le dispositif supérieur comprennent chacun une unité d'authentification d'informations (241, 561) configurée pour effectuer une authentification mutuelle sur les informations spécifiques en tant qu'unité de protection des données.

3. Le système de surveillance de batterie selon la revendication 1 ou 2, dans lequel l'unité de surveillance comprend, en tant qu'unité de protection des données, une unité de communication cryptée (245) qui crypte et transmet les données de surveillance au dispositif supérieur.

4. Le système de surveillance de batterie selon l'une des revendications 1 à 3, dans lequel l'unité de surveillance comprend, en tant qu'unité de protection des données, une unité d'arrêt automatique (244) qui arrête sa propre fonction lorsque l'unité de diagnostic diagnostique que le signal de commande est inapproprié.

5. Le système de surveillance de batterie selon l'une des revendications 1 à 4, dans lequel
le dispositif supérieur comprend une fonction de contrôle de charge pour contrôler la charge de la batterie,
chacune des unités de surveillance et du dispositif supérieur stocke un ID unique attribué à l'unité de surveillance,
chacune des unités de surveillance et du dispositif supérieur comprend une unité d'authentification de données (242, 562) configurée pour effectuer une authentification mutuelle sur l'ID unique, et
le dispositif supérieur interdit la charge de la batterie dans le cas où un résultat d'authentification par l'unité d'authentification des données indique une incompatibilité entre l'ID unique stocké dans chacun des dispositifs supérieurs et l'unité de surveillance.

6. Le système de surveillance de batterie selon l'une des revendications 1 à 5, dans lequel l'unité de surveillance comprend, en tant qu'unité de protection des données, une unité de restriction d'accès (247) qui restreint l'accès externe aux données de surveillance stockées dans une unité de stockage (22) de l'unité de surveillance, et une unité d'annulation d'accès (248) qui annule la restriction d'accès lorsqu'une clé d'annulation prédéfinie est notifiée par le dispositif supérieur dans un état où l'accès est restreint.

7. Le système de surveillance de batterie selon la revendication 6, dans lequel
l'unité de restriction d'accès restreint l'accès en amenant un dispositif de stockage externe (60) situé à l'extérieur de l'unité de surveillance à stocker les données de surveillance en tant que données de sauvegarde, puis en supprimant les données de surveillance de l'unité de stockage, et
lorsque la clé d'annulation est notifiée, l'unité d'annulation d'accès annule la restriction d'accès en restaurant les données de surveillance dans l'unité de stockage à l'aide des données de sauvegarde stockées dans le dispositif de stockage externe.

8. Le système de surveillance de batterie selon la revendication 6 ou 7, dans lequel
l'unité de restriction d'accès restreint l'accès en interdisant l'accès aux informations à l'unité de stockage, et
lorsque la touche d'annulation est notifiée, l'unité d'annulation d'accès annule la restriction d'accès en autorisant l'accès aux informations.

9. Le système de surveillance de batterie selon la revendication 6 ou 7, dans lequel
l'unité de restriction d'accès restreint l'accès en cryptant les données de surveillance dans l'unité de stockage, et
lorsque la clé d'annulation est notifiée, l'unité d'annulation d'accès annule la restriction d'accès en décryptant les données de surveillance cryptées.

10. Le système de surveillance de batterie selon la revendication 6 ou 7, dans lequel
l'unité de restriction d'accès restreint l'accès en interdisant au moins l'une des opérations de lecture ou de réécriture des données de surveillance dans l'unité de stockage, et
lorsque la clé d'annulation est notifiée, l'unité d'annulation d'accès annule la restriction d'accès en autorisant la lecture et la réécriture des données de surveillance dans l'unité de stockage.
